Europäisches Patentamt

European Patent Office

Office européen des brevets

(11) Publication number: **0 386 679 B1**

# EUROPEAN PATENT SPECIFICATION

(45) Date of publication of patent specification: 15.06.94  (51) Int. Cl.⁵: **G01N 25/48**, G01N 31/16

(21) Application number: 90104213.5

(22) Date of filing: 05.03.90

(54) **Method of analyzing washings for metal and apparatus.**

(30) Priority: 10.03.89 JP 59075/89

(43) Date of publication of application:
12.09.90 Bulletin 90/37

(45) Publication of the grant of the patent:
15.06.94 Bulletin 94/24

(84) Designated Contracting States:
BE DE ES FR GB IT NL SE

(56) References cited:
US-A- 3 593 119

CHEMICAL ABSTRACTS, vol. 104, no. 26, 30 June 1986 Columbus, Ohio, USA Y. OGURI ET AL: "A new computerized analyzing method of acid and cation concentration in hydrofluoric-nitric acid bath" page 784

PATENT ABSTRACTS OF JAPAN vol. 11, no. 170 (P-581)(2617) 02 June 1987;& JP-A-62002144

CHEMICAL ABSTRACTS, vol. 99, no. 26, 26 December 1983 Columbus, Ohio, USA I. KOTANI: "Handy method for determining the concentrations of the metal ions and acid in pickling solutions" page 762

PATENT ABSTRACTS OF JAPAN vol. 6, no. 96 (P-120)(974) 04 June 1982;& JP-A-57029946

(73) Proprietor: UNITIKA LTD.
50, Higashi Hommachi 1-chome
Amagasaki-shi Hyogo-ken(JP)

(72) Inventor: Ishibashi, Tadaya
27-1-1206, Asahigaoka
Suita-shi, Osaka(JP)

(74) Representative: Le Vrang, Klaus et al
Fliederstrasse 1
D-85139 Wettstetten (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Field of the Invention

The present invention relates to a method of analyzing washings for metals and an apparatus for the same, in particular to a method, in which reagents are added to a solution produced in the pickling process in the manufacture of special steels and containing mixture metallic ions to make the chemical reaction progress, the temperature-change informations resulting from the endo thermic phenomenon or the exothermic phenomenon accompanied by said chemical reaction and the electrical conductibility-change showing ionic dissociation characteristics of products accompanied by said chemical reaction being simultaneously measured, and said measured values being continuously taken in a computer to be operated, whereby analyzing an ionic condition of many kinds of dissolved metallic ion in the continuous dissolving line system, and an apparatus for the same. This continuous dissolving line system is automatically operated and controlled.

BACKGROUND OF THE INVENTION

Recently, it has been necessary in many cases to control the bath in composition in the watching system of the washings for metals in the manufacturing system of special steels and the like. Accordingly, various kinds of analyzing method have been adopted. In general, a pH meter, an electrical conductibility meter, a potentiometric titrater, a simplified monitor by the fluorescent radiation method and the like have been used. Above all, the fluorescent radiation method and the control of the bath in composition by the partition quantitative analysis of free acids and metals using the redox titration have been practically used.

However, according to these methods, the concentrations of many kinds of metal can be accurately determined but the ionic condition of the respective metals can not be determined. In addition, the quantity of free acids and the total acid quantity can be determined. But, in this case, the comparison with the model solution in the off-line must be conducted. As a result, the methods are remarkably complicated. Furthermore, the analysis of many kinds of dissolved metallic ion by the fluorescent radiation method shows disadvantages in that the cost of plant and equipment is expensive and a person in charge of the handling of X-rays is necessary. As above described, the known methods have many problems and a method of quantitatively determining a mixture of free acid groups and dissolved heavy metallic ions, in which the operation and control can be easily, automatically, continuously and accurately conducted, has been desired earnestly.

The present inventor has proposed a method of temperature titration and an apparatus for the same in Japanese Patent Application Laid-Open No. Sho 62-2144 in view of the above described problems.

This method consists in that a certain appointed quantity of continuously flowing sample eluated solution is sampled, an appointed quantity of reagents being continuously added to the sampled eluated solution, a speed and a quantitative magnitude of a thermal change resulting from the neutralization heat, dilution heat and the like of many kinds of element ion contained in the sample solution being simultaneously measured by the temperature titration, and the resulting data being operated to determine end points of reactions of the respective ions, whereby analyzing an ionic condition of many kinds of dissolved metal in the continuous ion-eluating line system.

However, in this method, if the temperature of the diluent liquid used for diluting the sample and the temperature of the alkaline solution poured for the titration in the analytical operation are different from that of the sample solution, the transition-partition points to a nitrate group and a fluoric acid group become indistinct and if the temperature of the solution to be poured is higher, the detection becomes impossible, that is every analytical value has been wanting in reproducibility and stability. In addition, if the temperature of the alkaline solution is equal to that of the diluent liquid, the end point shows an equilibrium value but in usual it is difficult to keep both liquids at the same one temperature and thus the judgement of the quantitative detection point of the total acid group has been wanting in stability.

DISCLOSURE OF THE INVENTION

It is an object of the present invention to provide an operation method, in which a temperature titration as the basic principle of the thermal analysis and an electrical conductibility method showing the ionic dissociation are used together, the apparatus and equipment being not complicated in control, and there being not problems, such as interferential effects by coexisting substances, incidental to a sample solution, and an apparatus for the same.

2

In order to achieve the above described object, a first aspect of the present invention consists in a method of analyzing a solution as defined in claim 1.

A second aspect of the present invention consists in an apparatus for analyzing a solution as defined in claim 4.

The method according to the present invention is suitable for the measurement of the concentrations of known kinds of ion contained in the metal eluated solution and can separate and quantitatively determine many kinds of ingredient ion particularly contained in the eluated solution in high accuracy by merely one measurement. In addition, the method according to the present invention can carry out the automatic control of the continuous eluation line simply in a short time by the use of the results of the partition quantitative determination.

Furthermore, not only a time and a labor required for the analytical operation of the dissolved ingredients in the eluated solution can be remarkably reduced but also a cost of the reagent can be reduced by incorporating this method into the continuous eluation line. Besides, the end points of the chemical reactions can be sensitively detected by means of two detecting means effectively combined with each other and the respective reaction steps of the dissolved ions can be continuously separated with the lapse of time on the basis of said end points of the chemical reactions. Accordingly, the partition quantitative determination of for example free single acids, coexisting acids, bases, organic acids and inorganic acids and the quantitative analysis of the total acid groups and heavy metallic ions are possible. The feedback to the production line can be conducted on the basis of these analytical results, so that the bath can be continuously controlled.

## BRIEF DESCRIPTION OF THE DRAWINGS

Fig. 1 shows a construction of a detecting portion for carrying out the temperature titration and the measurement of electrical conductibility in an apparatus according to one preferred embodiment of the present invention;

Fig. 2 is an enlarged front view showing an electrical conductibility sensor shown in Fig. 1;

Fig. 3 is a bottom view showing the sensor shown in Fig. 2;

Fig. 4 is a diagram showing a sectional shape of an electrode in the sensor shown in Figs. 2, 3;

Fig. 5 is a front view showing the sensor integrally comprising a temperature-sensitive resistance element and the electrical conductibility sensor shown in Fig. 1;

Fig. 6 is a bottom view showing the sensor shown in Fig. 5;

Fig. 7 is a rough block diagram showing a basic control device according to the present invention;

Fig. 8 shows a device for carrying out the temperature titration and the measurement of electrical conductibility;

Fig. 9 is a flow chart corresponding to the device shown in Fig. 8; and

Figs. 10, 11 are graphs showing the results of the temperature titration and measurement of electrical conductibility.

## ADDITIONAL DISCLOSURE OF THE INVENTION

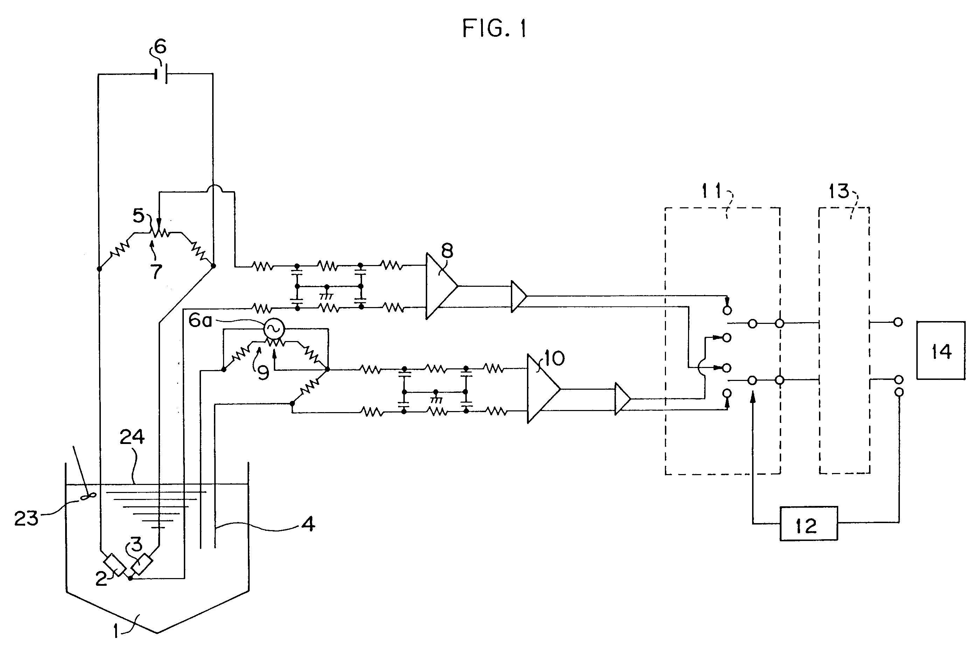

The temperature-change and the electrical conductibility-change, which are basic ideas of the present invention, are described with reference to Fig. 1.

As to the temperature-change of the reaction solution, the titration time in a reaction tank (1) is short and said reaction tank (1) is held within an insulating system, so that it is hardly required to take the going in and out of heat other than the reaction heat into consideration. A pair of heat-sensitive resistance elements (2), (3) shown in Fig. 1 form an element for putting a first mode into practice, that is a differential temperature-detecting portion, adapted to have a difference in thermal response speed so as to detect the temperature-change due to the chemical reactions of dissolved ions in high sensitivity in the titration. In a temperature-detecting portion of said heat-sensitive resistance elements (2), (3), a difference in indicated temperature $\Delta T = T_1 - T_2$ resulting from an endothermic phenomenon or an exothermic phenomenon generated by the chemical reaction within an appointed short time (about several ten msec) in the reaction tank (1) is detected ($T_1$ - - - an indicated temperature value of the heat-sensitive resistance element having a faster thermal response speed, $T_2$ - - - an indicated temperature value of the heat-sensitive resistance element having a slower thermal response speed). If such the detecting method is used, a temperature-change curve is apparently a primary differential curve. Hereinafter the method of detecting this temeprature-difference is referred to as the indication difference method. The temperature-change curve obtained by this indication difference method responds sharply to the smallest temperature-change. Since a change

3

of electric resistance caused by a temperature in this indication difference method is very small, a signal is converted into an electric current by the unbalance of a bridge circuit (7) including a direct current-stabilizing power source (6) and then converted into a signal of voltage gradient dE/dt (dE: voltage-change; dt: very small time) through an amplifier circuit (8) followed by being taken in a computer (14) through a detector-changing over circuit (11), a changing over signal-generating portion (12) and an A/D convertor circuit (13) to be an object of the operation and control.

On the other hand, the electrical conductibility-change curve is obtained from a change of electrical conductibility in the solution with the lapse of time and the electrical conductibility is detected by means of an electrical conductibility sensor (4) provided with a pair of electrodes.

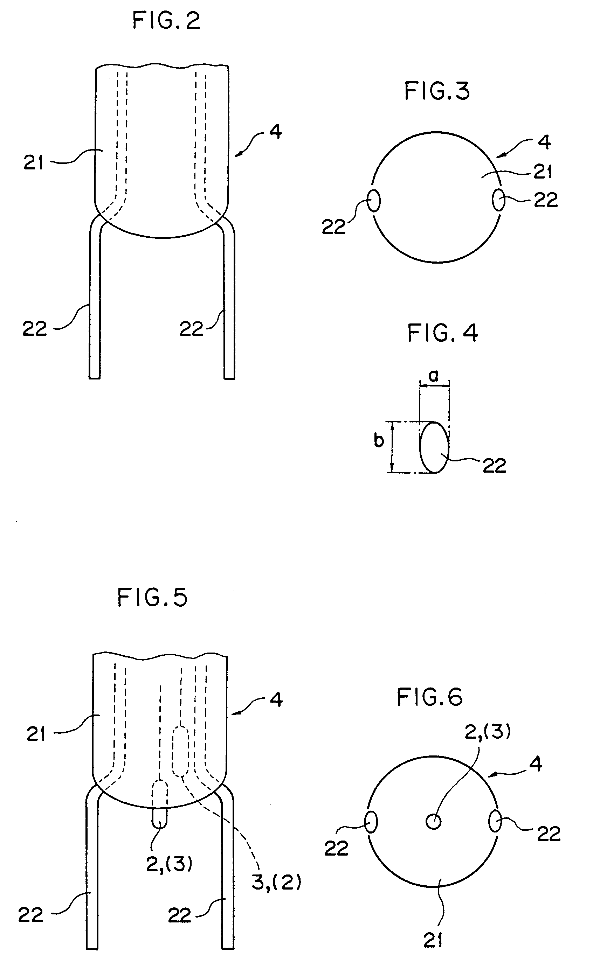

Said electrical conductibility sensor (4) is detailly shown in Figs. 2 to 4. Reference numeral (21) designates a cylindrical supporting member formed of chemically stable resins. Reference numeral (22) designates a pair of electrodes passing through said supporting member (21) in the longitudinal direction and projecting outward from the supporting member (21) at a pointed end portion thereof. Said pair of electrodes (22) are formed of platinum electrodes disposed at an appointed interval therebetween and have an elliptical or circular section so that a ratio of the transversal diameter (a) to the conjugate axis (b) a:b may be 0.5:1.0 to 0.8:1.0. This sectional shape is uniform from the portion of the supporting member (21) to the pointed end of the electrodes (22).

A stirrer (23) is provided within the reaction tank (1) to stir a sample solution (24). If bubbles, which are generated in the stirring operation, and floating matters, which are produced in the titration reaction, are adhered to a surface of the electrodes (22), a surface area of the electrodes is changed, whereby the result of measurement is influenced in the form of the fluctuation of the indicated value of electrical conductibility and noises. In order to prevent foreign matters from adhering to the surface of the electrodes, it is sufficient to strongly stir but the strong stirring leads to an enhancement of introduction of bubbles into the sample solution (24), whereby it is difficult to obtain stabilized data of measurement. On the contrary, if the elliptical section as shown in Figs. 2 to 4 is used, the adherence of foreign matters to the surface of the electrodes (22) can be prevented even by weakly stirring.

A differential temperature sensor can be integrated with the electrical conductibility sensor (4), as shown in Figs. 5, 6. Measured values under the same one condition in the reaction tank (1) can be obtained without being accompanied by a substantial time lag by housing the heat-sensitive resistance elements (2), (3) in the supporting member (21), as shown in Figs. 5, 6. As a result, a time lag in the analysis of data can be reduced to improve the accuracy. Also the heat-sensitive resistance elements (2), (3) have an elliptical section in the same manner as the electrodes (22) to increase the stability of measured values.

With the electrodes having an elliptical section shown in Figs. 2 to 6, in the general system, in which electrodes are disposed within a titration-reaction tank and an insoluble dispersoid is formed within the reaction tank according to a kind of titrating solution used in dependence upon substances contained in the sample solution, the adherence of the reaction products to a surface of the electrodes can be effectively prevented.

A signal obtained by the use of the electrodes (22) having such the special shape catches the electrical conductibility-change in the form of a voltage-change, so that it is converted into an electric current by the unbalance of the bridge circuit (9) including an alternating-current power source (6a) for use in the measurement of electrical conductibility therein and then converted into a signal of voltage gradient dE/dt (dE: voltage-change; dt: very small time) through the amplifier circuit (10) followed by being taken in the computer (14) through the detector-changing over circuit (11), the changing over signal-generating portion (12) and the A/D convertor circuit (13) to be operated and controlled. In the above described manner, the electrical conductibility-change can be continuously detected by the second mode from the start of the titration until the completion of the chemical reaction in the reaction tank (1) to obtain the electrical conductibility curve for the whole chemical reaction. Hereinafter this mode is referred to as the electrical conductibility-change method.

The respective change curves obtained by the indication difference method and the electrical conductibility-change method are stocked in the computer (14) time-sequentially and operated to determine the end point of the reaction. Whereupon, both change curves are analyzed at once to determine various kinds of factor, such as concentration of every solute ionic ingredient and total quantity of acids, in the sample solution in which the chemical reaction has been brought about.

An apparatus, in which two detecting methods and detecting mechanisms - said indication difference method and said electrical conductibiiity-change method - are incorporated into the continuous elution line, and a method of operating said apparatus are below roughly described.

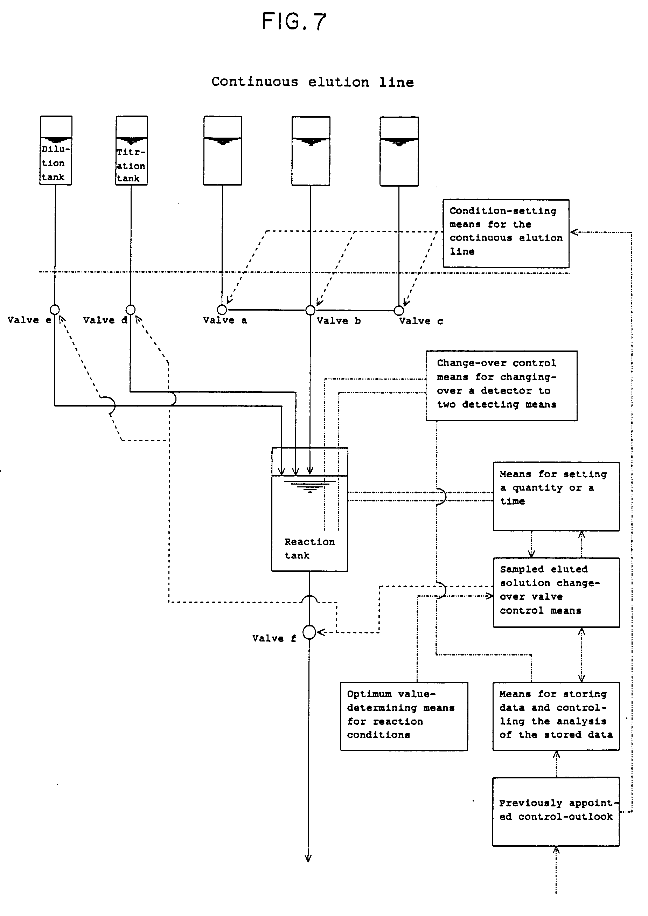

With this apparatus, a previously set appointed quantity of the solution eluted from the continuous elution line, in which known kinds of ion are contained, are automatically introduced into the reaction tank for every appointed quantity of elution or appointed time and the titrating solution is continuously poured into said reaction tank at a constant rate to automatically and continuously separate and quantitatively determine many kinds of ionic ingredient dissolved in the eluted solution within a short time. Its basic construction is described with reference to Fig. 7. As shown in Fig. 7, the appointed quantity of eluted solution is introduced into the reaction tank by opening any one of valves (a) , (b), (c) by means of at least one series of "continuous elution line condition-setting means", a valve (d) of the titration tank being opened by "sampling-drainage change over valve-controlling means and "quantity or time-setting means" to automatically and continuously add the previously prepared titrating solution to the eluted solution at the constant rate, whereby bringing about the chemical reaction, and the very small temperature-change and electrical conductibility-change resulting from the chemical reaction being continuously detected by two characteristic signal values to analyze the reaction. In order to conduct this analysis and control the operation of the present apparatus, "data-storing and analytical operation-controlling means" is provided. This analytical means is provided with means for determing the total quantity of acids and the like of the continuous elution line.

According to the present invention, the temperature-change and electrical conductibility-change of the reaction liquid can be continuously detected to separate and quantitatively determine the ionic ingredients dissolved. In case of need, a program for controlling the quantity of sample solution to be introduced into the reaction tank or a program of a large number of "continuous elution line condition-setting means", a program of "sampling-drainage change over valve-controlling means" opening a valve (f) of the reaction tank and a driving mechanism may be adopted. For example, in the case where it is not necessary to measure the temperature-change and the electrical conductibility-change within the reaction tank, it is sufficient to put "a previously appointed control prospect" in the computer and drain the solution from the reaction tank by controlling the valve (f). In addition, for example in the case where the concentration of the ingredients in the solution is extraordinarily high not to be able to sufficiently stir, "optimum reaction condition-establishing means" capable of adjusting the reaction conditions to the optimum values by opening a valve (e) of a diluent solution tank to add a diluent solution to the sample solution may be provided. Furthermore, a digital computer is suitable used for the operation and control in the present apparatus but also an analog operating controller may be used.

DESCRIPTION OF THE PREFERRED EMBODIMENTS

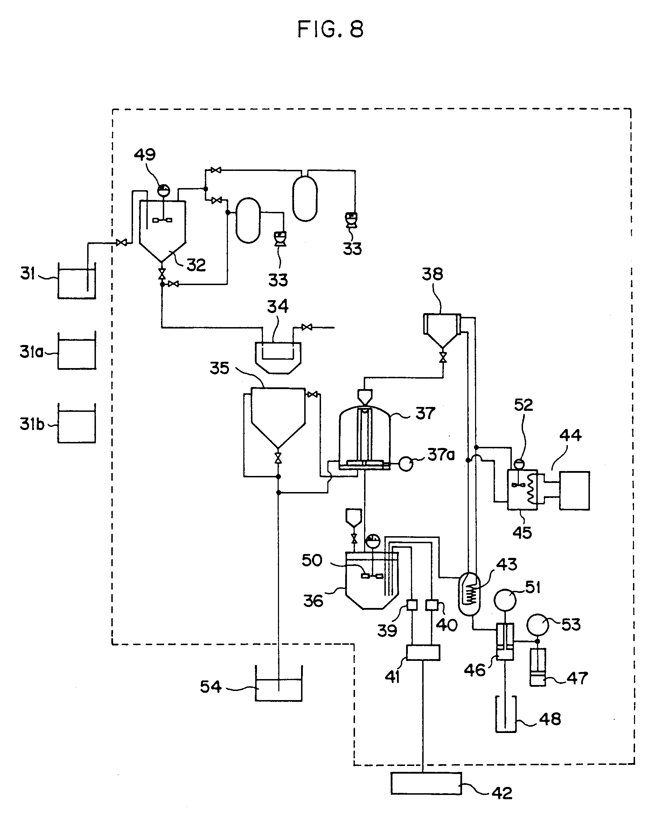

The preferred embodiments of the apparatus according to the present invention are below concretely described with reference to Fig. 8.

In addition, Fig. 8 shows one preferred embodiment of the present invention merely for illstration and accordingly, the present invention is not limited by the preferred embodiments. The apparatus shown in the drawing according to the preferred embodiments is described with the case where it is used for the partition quantitative determination of many kinds of dissolved ionic ingredient as an example.

EXAMPLE 1

Referring to Fig. 8, a sample pickling solution comprising $HNO_3$ and HF is introduced into a sample tank (32) from a bath tank (31), in which wire materials made of stainless alloys have been subjected to the pickling, an appointed quantity of the sample pickling solution being automatically taken out from said sample tank (32) by means of a pump (33) to be transferred to a cooling tank (34), where very small floating matters are filtrated, and the resulting filtrate being put in a filtration tank (35). Then, the filtrated sample solution is introduced into a measuring tank (37) to send a sample of 0.5 cc together with a diluent water (38), of which temperature has been previously controlled in a thermostatic oven (55), of 10 cc to a reaction tank (36) having an internal capacity of 18 cc with washing a measuring meter (37a) of said measuring tank (37) with said diluent water (38). Said reaction tank (36) is formed of corrosion resistant materials such as polytetrafluoroethylene. The reaction vessel (36) is provided with a stirrer (50) formed of polytetrafluoroethylene disposed therewithin and insulated so as to make the heat exchange with an outside minimum.

After the lapse of about 80 seconds since the introduction of the diluent solution into the reaction tank (36), a previously prepared 2 N-sodium hydroxide titrating solution is begun to be poured into the reaction tank (36) through a titrating solution-supply portion (46) from a tank (48) by means of a constant-quantity filling pump (47) to bring about a neutralization reaction within the reaction tank (36). A state of the reaction solution changing with the lapse of time resulting from the neutralization reaction within the reaction tank (36) is continuously converted into signals in a temperature-detecting portion (39) and an electrical conductibility-detecting portion (40) of the respective sensors in the indication difference method and the electrical conductibility-change method and the resulting signals are put in a computer (42) through a signal conversion circuit (41) to compile and analyze data.

Referring to Fig. 8 again, reference numeral (43) designates a temperature-controlling pipe of the titrating solution communicated with a thermostatic tank (45). Reference numeral (44) designates a temperature-regulating portion of said thermostatic tank (45). Reference numerals (51), (53) designate a driving motor for driving the titrating solution-supply portion (46) and the constant-quantity filling pump (47), respectively. Reference numerals (49), (52) designate a stirrer for the sample tank (32) and the thermostatic tank (45), respectively. Reference numeral (54) designates a drain-receiving tank for the solution stocked for measuring the sample.

If the constant-quantity feeding of the titrating 2 N-aqueous solution of sodium hydroxide is conducted at such a rate that the reaction may arrive at the end point within about 120 to 180 seconds, the temperature-titration and the electrical conductibility-change can be easily analyzed. In addition, a quantity of the solution used for the titration about 1/10 to 1/20 times that of the diluent solution is optimum.

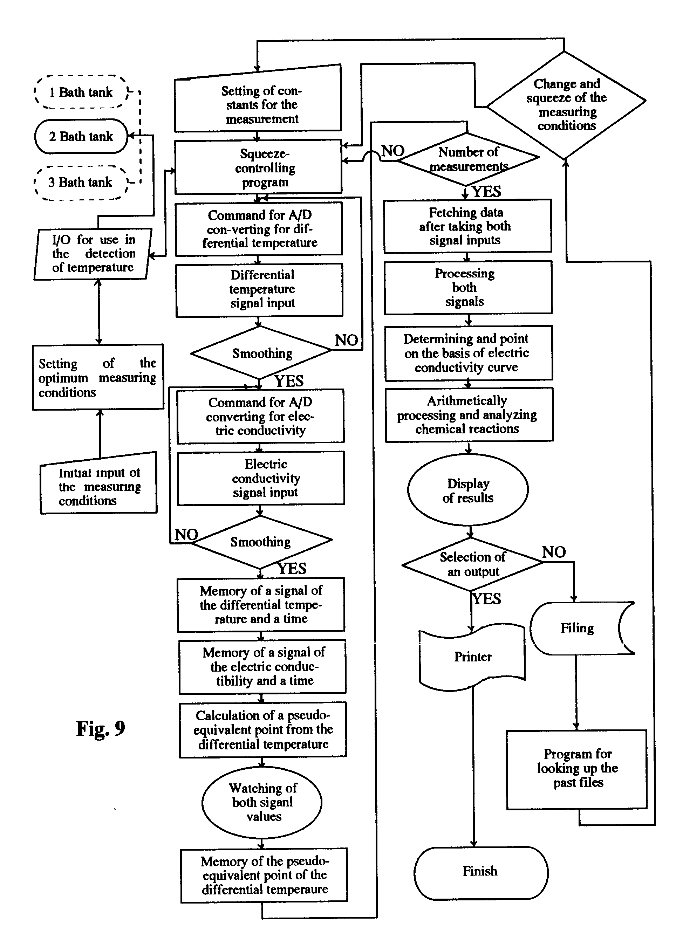

In order to still further detailly describe the preferred embodiments of the present invention, a flow chart of programs shown in Fig. 9 relating to the apparatus and mechanism shown in Fig. 8 is below roughly described.

In the process according to the present invention, the initial values of constants for the measurement and control as well as the measuring conditions, in particular their optimum conditions, are put in from outside, the sample eluted solution being introduced into the reaction tank from the previously appointed bath tank, the reaction reagent being added to the sample eluted solution to bring about the chemical reaction, and the temperature-change and ionic dissociation characteristics in the process of said chemical reaction being detected by two methods - the indication difference method and the electrical conductibility-change method.

The detection of these two signals is put into practice from the I/O program of the temperature-detection and electrical conductibility-detection through the control-starting program.

In the detection of these two signals, in order to improve the S/N ratio, the levelling treatment is carried out and when the S/N ratio reaches the appointed value, the respective signals and the respective times at that time being determined, and then they being memorized in the form of the respective signal values corresponding thereto.

In this flow, the positions of the equivalent points of the reactions brought about in the respective reaction steps are calculated by the supplementary program for looking for the point of inflection from the temperature-change curve obtained by the indication difference method.

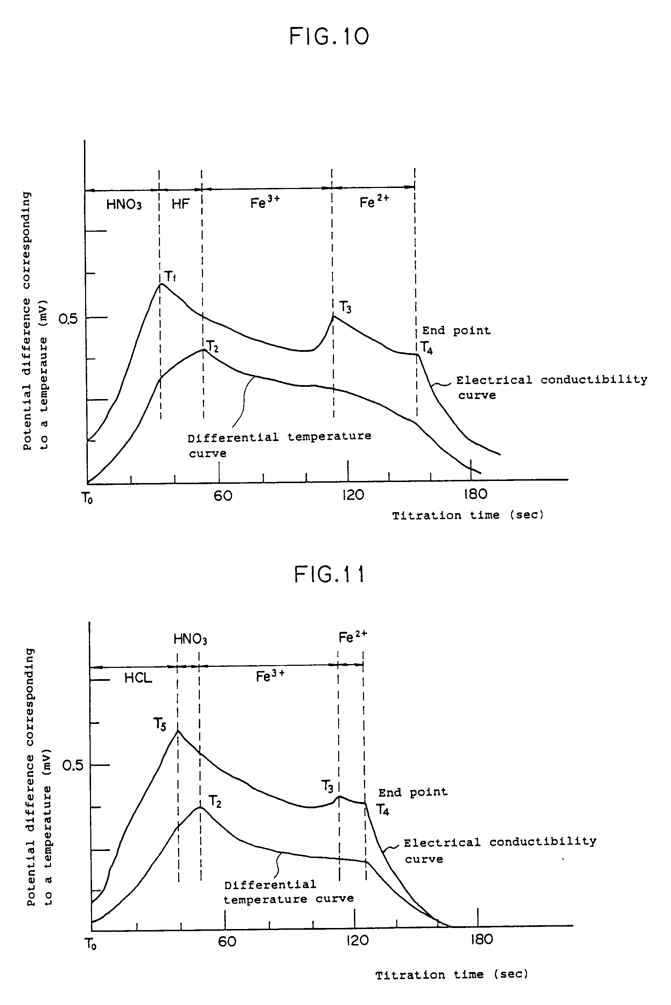

These two signal-change curves are continuously watched on a CRT of a terminal of the computer until the measurement reaches the end point and the measured points are recorded. After the completion of the measurement, the signal values of the temperature-change and the electrical conductibility-change obtained by two methods are taken out from the memory to be automatically processed by an editing program, for example an operation of marking the point of inflection in the curve is automatically carried out. The results of the temperature-titration and the measurement of electrical conductibility are shown in Fig. 10. It is judged that the largest point of inflection seen first from a titration-starting point of time ($T_0$) on the electrical conductibility-change curve is an equivalent point ($T_1$) of a nitrate group and the largest point of inflection ($T_2$) seen on the differential temperature-change curve is a synthetic equivalent point of free acids. Subsequently, a point of inflection ($T_3$) seen on the electrical conductibility-change curve is determined. This ($T_3$) is an equivalent point of metallic salts and ($T_4$) is determined additionally. As to the end point of the reaction, the largest and last point of inflection seen on the electrical conductibility-change curve after the point of time when no point of inflection can not be seen on the differential temperature-change curve is regarded as the end point of the reaction. The end point ($T_4$) of the whole chemical reaction system is determined from the electrical conductibility-change curve in the above described manner to determine the total quantity of acids and additionally the respective compositional ratios are determined from the respective pseudoequivalent points, which have been previously determined by the indication difference method, and the points of inflection on the electrical conductibility-change curve by the supplementary program.

On the basis of the analysis of the above described points of inflection, the compositions of the respective ingredients are determined as follows, that is a quantity of a free nitric acid group is calculated by ($T_1$)-($T_0$) , a quantity of a free fluoric acid group being calculated by ($T_2$)-($T_1$), a quantity of 3-valence metallic ions being calculated by ($T_3$)-($T_2$), and a quantity of 2-valence metallic ions being calculated by ($T_4$)-($T_3$) . Accordingly, the total quantity of free acid groups is determined by ($T_2$)-($T_0$) and the total quantity of metallic ingredients is determined by ($T_4$)-($T_2$).

6

After the completion of the analysis of the chemical reaction, the results are printed by means of a printer or put in a memory medium for filing. In addition, it is possible also to reproduce the control by looking up the past files in case of need. Besides, in order to cope with the changes of the measuring conditions, a squeezible supplementary program is provided.

According to the present preferred embodiment, the temperature-change and the electrical conductibility-change brought about in the reaction tank can be caught sharply and in high accuracy by obtaining two kinds of change curve by the use of the indication difference method together with the electrical conductibility-change method. That is to say, since the differential temperature curve and the electrical conductibility curve show sharp changes at the equivalent points in the respective steps of the reaction, the existence of the equivalent points can be surely shown and the quantity of the titrating solution consumed until the respective equivalent points can be shown in high accuracy.

The indication difference method can sharply detect the equivalences of the respective free acids. On the other hand, the electrical conductibility-change method shows $HNO_3$, 2-valence metals and the change of the end point of the reaction more clearly than the indication difference method.

Even the sample solution, which is difficult to judge by merely the differential temperature curve, can be appropriately and surely detected and judged by synergistically using these two detecting methods to investigate also the electrical conductibility curve. In addition, the detecting method can be simplified. The influences by a heat coming from the outside during the reaction and the change of the heat-sensitive resistance element in detection sensitivity by the floating matters formed by the reaction are compensated by measuring the electrical resistance curve.

The total quantity of free acids, the quantity of the free nitric acid ion and the quantity of the free fluorine ion were calculated from the points of inflection obtained by the indication difference method and the points of inflection obtained by the electrical conductibility-change method of the curves shown in Fig. 10 and the concentrations of ferrous ion and ferric ion were calculated from the points of inflection obtained by the electrical conductibility-change method by means of the computer.

The concentrations of the respective ingredients obtained in the above described manner are below described. the marks shown in ( ) show the points of inflection corresponding to the respective ions on the differential temperature curve and the electrical conductibility curve in Fig. 10. The following results were obtained: $HNO_3$ $(T_1)$ 0.97N, $HF(T_2)$ 0.51N, $Fe^{3+}(T_3)$ 0.2N, $Fe^{2+}(T_4)$ 1.2N and 4.4N in all.

The reliability of the kinds and concentrations of the respective eluted ionic ingredients determined by the present method and apparatus was confirmed by putting the standard solutions of the respective ions in the same one apparatus, pouring the titrating solution into said respective standard solutions to make the chemical reactions progress, obtaining the differential temperature curve and the electrical conductibility curve, and analyzing said curves.

As a result, it was found that all kinds of ionic ingredient in the present preferred embodiment of the present invention were shown on the graphs and errors of measurement for the respective ion concentrations were held within ± 2.5 %. Thus, it was confirmed that the respective ionic ingredients in the solution eluted from the metal pickled could be accurately identified and quantittatively determined by the method and apparatus according to the present invention. Table 1 shows the titrating conditions and the measured results according to the method disclosed in the above described Japanese Patent Application Laid-Open No. Sho 62-2144 and the method of the present invention.

7

Table 1

Method according to Japanese Patent Application Laid-Open No. Sho 62-2144

| Temperature within the reaction tank | Temperature of alkali to be poured | Free nitric acid (N) | | Free HF (N) | | Fe (3+) (N) | | Fe (2+) (N) | | Total acid (N) | |
|---|---|---|---|---|---|---|---|---|---|---|---|
| | | Theore-tical | Measur-ed | Theore-tical | Measur-ed | Theore-tical | Measur-ed | Theore-tical | Measur-ed | Theore-tical | Measur-ed |
| 15 °C | 14.5 °C | 0.8 | 0.75 | 0.5 | 0.55 | 0.3 | 0.25 | 0.3 | 0.31 | 1.9 | 1.86 |
| 20 °C | 18 °C | 0.8 | 0.65 | 0.5 | 0.65 | 0.3 | 0.4 | 0.3 | 0.2 | 1.9 | 1.9 |
| 20 | 20 | 0.8 | 0.87 | 0.5 | 0.43 | 0.3 | 0.35 | 0.3 | 0.3 | 1.9 | 1.95 |
| 25 | 19 | 0.8 | 0.70 | 0.5 | 0.6 | 0.3 | 0.15 | 0.3 | 0.4 | 1.9 | 1.85 |

In addition, the present invention is superior also in the case where a mixture of compounds different in reaction heat and ionic dissociation characteristic is analyzed. Furthermore, even in the case where a mixture containing compounds, which are difficult to be dissociated, is analyzed, the partition is possible by making them coexist in the form of third substances, which easily form a complex, to generate a difference between the mixed substances in reaction speed.

Table 1 (continued)

Method according to the present invention

| Temperature within the reaction tank | Temperature of alkali to be poured | Free nitric acid (N) | | Free HF (N) | | Fe(3+) (N) | | Fe(2+) (N) | | Total acid (N) | |
|---|---|---|---|---|---|---|---|---|---|---|---|
| | | Theoretical | Measured | Theoretical | Measured | Theoretical | Measured | Theoretical | Measured | Theoretical | Measured |
| 15 °C | 14.5 °C | 0.8 | 0.78 | 0.5 | 0.51 | 0.3 | 0.28 | 0.3 | 0.29 | 1.9 | 1.86 |
| 20 °C | 18 °C | 0.8 | 0.79 | 0.5 | 0.50 | 0.3 | 0.29 | 0.3 | 0.29 | 1.9 | 1.87 |
| 20 | 20 | 0.8 | 0.79 | 0.5 | 0.49 | 0.3 | 0.30 | 0.3 | 0.31 | 1.9 | 1.89 |
| 25 | 19 | 0.8 | 0.81 | 0.5 | 0.49 | 0.3 | 0.29 | 0.3 | 0.29 | 1.9 | 1.88 |

EXAMPLE 2

A solution containing $HNO_3$ and HCl eluted from a metal when pickled was analyzed by the method used in EXAMPLE 1.

As shown in Fig. 11, the detections of free acids, such as $HNO_3$ ($T_2$) and HCl ($T_5$) , and ferric ion ($T_3$) were possible.

**Claims**

1.  A method of analyzing a solution which has been used for pickling a metal, in which one reagent is added to said solution containing many kinds of known dissolved substances different to each other in temperature change and electrical conductivity change to said one reagent to analyze a thermometric titration and a change of ionic dissociations of reaction products,
    characterized in that
    in the titration of the above described dissolved substances with the above described reagent a differential temperature curve obtained by using a pair of temperature sensors with different thermal response speeds and an electric conductivity curve are substantially simultaneously obtained, pseudoequivalent points of the reactions of the respective dissolved substances being determined from the differential temperature curve, and then kinds of the substances being identified from peak values of measured values in the electric conductivity curve to analyze the kinds of said known substances dissolved in the solution and the concentration of each of said known substances.

2.  A method of analyzing a solution as set forth in claim 1, characterized in that in order to detect an actual temperature of the reaction solution, one heat-sensitive resistance element is combined with a previously regulated resistance element and a difference between these two resistance elements in resistance is detected from an output of a bridge.

3.  A method of analyzing a solution according to claim 1, characterized in that in order to detect the differential temperature of the reaction solution, two heat sensitive resistance elements having substantially equal heat-sensitive resistance and thermal response speeds different to each other are used and in order to detect the actual temperature of the reaction solution, one of said heat-sensitive resistance elements is combined with the other of said heat-sensitive resistance elements which has been previously regulated and a difference between these two resistance elements in resistance is detected from an output of a bridge automatically changed over alternately whereby a detected value of the differential temperature of the reaction solution and a detected value of the actual temperature of the reaction solution are put out intermittently.

4.  An apparatus for analyzing a solution (24) containing many kinds of known dissolved substances, characterized in that said apparatus includes a reaction tank (1) of heat insulating construction adapted to contain said solution (24) and carry out thermometric titration;
    that differential temperature sensors (2, 3) and an electrical conductivity sensor(4) are placed in said solution (24) contained in said reaction tank (1); and
    that said apparatus is further provided with means for recording during said thermometric titration differential temperature values and electric conductivity values respectively obtained substantially simultaneously from said sensors (2, 3, 4), means for generating from said respective recorded values a differential temperature curve and an electric conductivity curve, means for identifying from peak values on said electric conductivity curve of the kinds of said disolved substances in said solution (24) from pseudoequivalent points (i.e., peak values) on said differential temperature curve.

**Patentansprüche**

1.  Verfahren zur Analyse einer Lösung, die zum Abbeizen von Metall verwendet wurde, bei der ein Reagens der Lösung hinzugefügt wurde, die eine Vielzahl von bekannten gelösten Substanzen, jeweils sich in der Temperaturänderung und in der Änderung der elektrischen Leitfähigkeit unterscheidend, zu dem Reagens hinzugefügt wird, um eine thermometrische Titration und eine Änderung der ionischen Dissoziation der Reaktionsprodukte zu analysieren,
    dadurch gekennzeichnet, daß
    in der Titration der genannten gelösten Substanzen mit dem genannten Reagens eine Differentialtemperaturkurve erhalten wird, indem ein Paar Temperatursensoren mit unterschiedlicher thermischer Ansprachegeschwindigkeit verwendet wird, sowie im wesentlichen gleichzeitig eine elektrische Leitungsfähigkeitskurve erhalten wird, pseudoäquivalente Punkte der Reaktionen der jeweiligen gelösten Substanzen aus der Differentialtemperaturkurve bestimmt werden, und dann Arten der Substanzen aus den Spitzenwerten der gemessenen Werte in der elektrischen Leitungsfähigkeitskurve bestimmt werden, um die Arten der bekannten Substanzen in der Lösung sowie ihre jeweiligen Konzentrationen zu bestimmen.

2. Verfahren zur Analyse einer Lösung nach Anspruch 1, dadurch gekennzeichnet, daß zur Erfassung der aktuellen Temperatur der Reaktionslösung ein wärmeempfindlichen Widerstandselement mit einem vorher eingestellten Widerstandselement kombiniert wird, und ein Unterschied im Widerstand zwischen diesen beiden Widerstandselementen am Ausgang einer Brückenschaltung erfaßt wird.

3. Verfahren zur Analyse einer Lösung nach Anspruch 1, dadurch gekennzeichnet, daß zur Erfassung der Differentialtemperatur der Reaktionslösung zwei wärmeempfindliche Widerstandselemente mit im wesentlichen der gleichen Wärmewiderstandskurve und mit unterschiedlicher thermischer Ansprechgeschwindigkeit verwendet werden, und zur Erfassung der aktuellen Temperatur der Reaktionslösung eines der wärmeempfindlichen Widerstandselemente mit dem anderen wärmeempfindlichen Widerstandselement kombiniert wird, das vorab eingestellt wurde, und eine Differenz im Widerstand dieser beiden Elemente am Ausgang einer sich automatisch verändernden Brückenschaltung erfaßt wird, wobei ein erfaßter Wert der Differentialtemperatur der Lösung und ein erfaßter Wert der aktuellen Temperatur der Reaktionslösung intermittierend ausgegeben wird.

4. Einrichtung zur Analyse einer Lösung (24), die eine Vielzahl von bekannten, gelösten Substanzen enthält, dadurch gekennzeichnet, daß die Einrichtung einen wärmeisolierten Reaktionstank aufweist, der die Lösung (24) aufnehmen kann und die Durchführung einer thermischen Titration ermöglicht, daß Differenztemperatursensoren (2, 3) und ein Sensor (4) für die elektrische Leitfähigkeit in der Lösung (24) in dem Reaktionstank angeordnet sind; und daß die Einrichtung mit einer Aufzeichnungsvorrichtung zur Aufzeichnung der verschiedenen Temperaturwerte während der thermometrischen Titration und der Werte der elektrischem Leitungsfähigkeit, die jeweils im wesentlichen gleichzeitig von den Sensoren (2, 3, 4) erhalten werden, versehen ist, weiterhin mit Vorrichtungen zur Erzeugung einer Differentialtemperaturkurve und einer elektrischen Leitfähigkeitskurve aus den aufgezeichneten Werten, sowie Mittel zur Identifizierung der Art der Substanzen in der Lösung (24) auf der Basis der Spitzenwerte der elektrischen Leitfähigkeitskurve und der pseudoäquivalenten Punkte (d.h. der Spitzenwerte) der Differenztemperaturkurve.

**Revendications**

1. Procédé d'analyse d'une solution qui a été utilisée pour le décapage d'un métal, dans lequel un réactif est ajouté à ladite solution qui contient de multiples sortes de substances dissoutes connues, différentes les unes des autres en ce qui concerne la variation de température et la variation de conductivité électrique en présence dudit réactif, pour analyser un titrage thermométrique et une modification de dissociations ioniques des produits de réaction, caractérisé en ce que, dans le titrage desdites substances dissoutes avec ledit réactif, une courbe de température différentielle, obtenue au moyen d'une paire de détecteurs de température ayant des vitesses de réponse thermique différentes, et une courbe de conductivité électrique sont obtenues de façon pratiquement simultanée, des points pseudo-équivalents des réactions des substances dissoutes respectives etant déterminés à partir de la courbe de température différentielle, puis des sortes des substances étant identifiées d'après les pics des valeurs mesurées sur la courbe de conductivité electrique, pour analyser les sortes desdites substances connues dissoutes dans la solution et la concentration de chacune de ces substances connues.

2. Procédé d'analyse d'une solution selon la revendication 1, caractérisé en ce qu'afin de détecter une température effective de la solution réactionnelle, un élément à résistance sensible à la chaleur est combiné à un élément à résistance préalablement réglé et la différence de résistance entre ces deux éléments à résistance est détectée à partir d'une sortie d'un pont.

**3.** Procédé d'analyse d'une solution selon la revendication 1, caractérisé en ce qu'afin de détecter la température différentielle de la solution réactionnelle, deux éléments à résistance sensible à la chaleur, ayant une résistance sensible à la chaleur pratiquement égale et des vitesses de réponse thermique différentes l'une de l'autre, sont utilisés, et en ce qu'afin de détecter la température effective de la solution réactionnelle, l'un desdits éléments à résistance sensible à la chaleur est combiné à l'autre élément à résistance sensible à la chaleur qui a été préalablement réglé, et la différence de résistance entre ces deux éléments à résistance est détectée à partir d'une sortie d'un pont qui est automatiquement commutée alternativement de sorte que la valeur détectée de la température différentielle de la solution réactionnelle et la valeur détectée de la température effective de la solution réactionnelle sont émises par intermittence.

**4.** Appareil pour l'analyse d'une solution (24) contenant de multiples sortes de substances dissoutes connues, caractérisé en ce qu'il comprend un réacteur (1) de construction calorifugée, propre à contenir ladite solution (24) et à l'exécution d'un titrage thermométrique:

en ce que des détecteurs de température différentielle (2, 3) et un détecteur de conductivité électrique (4) sont placés dans ladite solution (24) contenue dans ledit réacteur (1); et

en ce que ledit appareil est en outre équipé de moyens pour enregistrer, pendant ledit titrage thermométrique; des valeurs de température différentielle et des valeurs de conductivité électrique obtenues respectivement desdits détecteurs (2, 3, 4) de façon pratiquement simultanée, de moyens pour générer, à partir desdites valeurs enregistrées respectives, une courbe de température différentielle et une courbe de conductivité électrique, et de moyens pour l'identification, à partir de valeurs de pic sur ladite courbe de conductivité électrique, des sortes desdites substances dissoutes dans ladite solution (24), à partir de points pseudo-équivalents (c'est-à-dire de valeurs de pic) sur ladite courbe de température différentielle.

FIG. 1

EP 0 386 679 B1

FIG. 2

FIG.3

FIG. 4

FIG.5

FIG.6

14

# FIG. 7

Continuous elution line

FIG. 8

**Fig. 9**

1 Bath tank

2 Bath tank

3 Bath tank

I/O for use in the detection of temperature

Setting of the optimum measuring conditions

Initial input of the measuring conditions

Setting of con-stants for the measurement

Squeeze-controlling program

Command for A/D con-verting for dif-ferential temperature

Differential temperature signal input

Smoothing — NO

YES

Command for A/D converting for elec-tric conductivity

Electric conductivity signal input

NO — Smoothing

YES

Memory of a signal of the differential tempe-rature and a time

Memory of a signal of the electric conduc-tibility and a time

Calculation of a pseudo-equivalent point from the differential temperature

Watching of both siganl values

Memory of the pseudo-equivalent point of the differential temperaure

Change and squeeze of the measuring conditions

NO — Number of measurements

YES

Fetching data after taking both signal inputs

Processing both signals

Determining and point on the basis of electric conductivity curve

Arithmetically processing and analyzing chemical reactions

Display of results

Selection of an output — NO

YES

Printer

Filing

Program for looking up the past files

Finish

## FIG.10

## FIG.11